# EUROPEAN PATENT APPLICATION

(11) **EP 4 521 526 A1**
(43) Date of publication of application: **12.03.2025**
(21) Application number: 22940551.9
(22) Date of filing: 05.05.2022
(51) Int. Cl.: H01M 50/216, H01M 10/0587, H01M 50/50

(54) **BUTTON CELL AND ELECTRONIC DEVICE**

(71) Applicant: Ningde Amperex Technology Limited, Ningde, Fujian 352100 (CN)
(72) Inventor: GAO, Huimin, Ningde, Fujian 352100 (CN); ZENG, Qiao, Ningde, Fujian 352100 (CN)
(74) Representative: Icosa
(86) International application number: PCT/CN2022/090930
(87) International publication number: WO 2023/212855

(57) **Abstract**

This application provides a button cell and an electronic device. The button cell includes a first housing, a second housing, an electrode assembly, and a first layer. The electrode assembly includes a winding body and a first metal plate, where the winding body includes a first electrode plate, and the first electrode plate includes a first current collector. The first metal plate is connected to the first current collector and extends out of the first current collector along a first direction, and a portion of the first metal plate connected to the first current collector is a first portion. The first layer is connected to the first metal plate and covers the first portion, where in the winding direction, the first layer includes a first side edge and a second side edge, the first side edge intersects with the first current collector at a first end point, and the second side edge intersects with the first current collector at a second end point. As viewed from the first direction, a line connecting the first end point and a winding central axis of the winding body is defined as a first virtual line, a line connecting the second end point and the winding central axis is defined as a second virtual line, and an included angle between the first virtual line and the second virtual line is 54° to 66°.

## Description

### TECHNICAL FIELD

This application relates to the technical field of electrochemical devices, and in particular, to a button cell and an electronic device.

### BACKGROUND

Due to their advantages such as rechargeability and reusability, button cells have been widely used in various electronic equipment such as portable electronic equipment. A button cell typically includes two interconnected housings and an electrode assembly disposed in the housing, where the electrode assembly includes a winding body and an electrode tab electrically connected to the winding body.

In related art, the electrode tab can be connected to the winding body through manners such as welding. To alleviate the influence of burrs at edges of the electrode tab and burrs at welding positions on the electrode assembly, adhesive layers such as adhesive tapes are typically attached to the electrode tab. However, the adhesive layers may affect the sealing of the housing of the button cell, thus affecting the sealing reliability of the button cell.

### SUMMARY

This application is intended to provide a button cell and an electronic device, so as to alleviate the influence of a first layer on a housing of a button cell and improve the yield and sealing reliability of the button cell.

An embodiment of a first aspect of this application provides a button cell. The button cell includes a first housing, a second housing, an electrode assembly, and a first layer. The first housing has a recess facing a first direction. The second housing covers the recess and is connected to and fits with the first housing to form an accommodating space. The electrode assembly is disposed in the accommodating space and includes a winding body and a first metal plate, where the winding body includes a first electrode plate, and the first electrode plate includes a first current collector. The first metal plate is connected to the first current collector and extends out of the first current collector along the first direction, and a portion of the first metal plate connected to the first current collector is a first portion. The first direction is perpendicular to a winding direction of the winding body. The first layer is connected to the first metal plate and covers the first portion. In the winding direction, the first layer includes a first side edge and a second side edge, where the first side edge and the second side edge extend out of the first current collector along the first direction, the first side edge intersects with the first current collector at a first end point, and the second side edge intersects with the first current collector at a second end point. As viewed from the first direction, a line connecting the first end point and a winding central axis of the winding body is defined as a first virtual line, a line connecting the second end point and the winding central axis is defined as a second virtual line, and an included angle between the first virtual line and the second virtual line is 54° to 66°.

In this application, a width of the first layer in the winding direction is limited. Setting the included angle between the first virtual line and the second virtual line to be greater than or equal to 54° allows for sufficient widths of both the first layer and the first metal plate, thereby helping ensure the conductivity of the first metal plate and further helping reduce the risk of burrs on the first metal plate damaging the first current collector or causing a short circuit. Setting the included angle between the first virtual line and the second virtual line to be less than or equal to 66° allows for an appropriate width of the first layer, thereby helping reduce the risk of interference between the first layer and the housing of the button cell, and thus improving the manufacturing efficiency and sealing reliability of the button cell.

In some embodiments, a width of the first metal plate in the winding direction is W₁ mm, a width of the first layer in the winding direction is W₂ mm, and as viewed from the first direction, a distance from the winding central axis to an outer edge of the winding body is R mm; where 0.4R≤W₁≤0.7R, and 0.95R≤W₂≤1.15R. Such setting helps further reduce the risk of burrs on the first metal plate damaging the first current collector or causing a short circuit, and also helps further reduce the risk of interference between the first layer and the housing of the button cell, thereby helping improve the production efficiency and sealing reliability of the button cell.

In some embodiments, the button cell further includes a second layer, where the second layer is connected to the first current collector and covers the first portion, the second layer is provided on a side of the first current collector facing away from the first layer, and the second layer extends out of the first current collector along the first direction and is connected to the first metal plate. Such arrangement allows the first metal plate to be doubly wrapped by the first layer and the second layer, thereby helping further reduce the risk of burrs on the first metal plate damaging the first current collector or causing a short circuit.

In some embodiments, the winding body further includes a second electrode plate and a separator provided between the first electrode plate and the second electrode plate, the second electrode plate includes a second current collector, the electrode assembly further includes a second metal plate, and the second metal plate is connected to the second current collector.

In some embodiments, the second housing is electrically connected to the first metal plate, and the first housing is electrically connected to the second metal plate. In this way, the current generated by the electrode assembly can be released through the housing of the button cell, which is conducive to increasing a contact area for charging and discharging the button cell, thereby helping improve the charging and discharging reliability of the button cell and the performance of the button cell.

In some embodiments, the second housing is welded to the first metal plate, and the first housing is welded to the second metal plate. The manner of welding is conducive to improving the connection reliability between the first metal plate and the second housing and the connection reliability between the first housing and the second metal plate.

In some embodiments, the first current collector includes a first region provided with a first active substance layer and a second region connecting to the first region along a side in the winding direction, the first portion is connected to the second region, and the first layer includes a third region covering the first active substance layer. The first layer has the third region overlapping with the first region provided with the first active substance layer, that is, a portion of the first layer covers an edge of the first active substance layer, which is conducive to reducing the risk of an active material detaching from the first current collector, improving the reliability of the button cell, and reducing the material cost of the first active substance layer.

In some embodiments, in the winding direction, a first distance between the first side edge and the first metal plate is b₁ mm, a second distance between the second side edge and the first metal plate is b₂ mm, and a width of the third region is b₀ mm; where 0<b₀<b₁, and b₂<W₂-W₁. In the winding direction, the first layer has the third region having the width b₀ and overlapping with the edge of the first active substance layer, which is conducive to reducing the risk of the active material detaching from the first current collector, improving the reliability of the button cell, and reducing the material cost of the first active substance layer. This can also balance the distance between the first metal plate and the first active substance layer, improve the uniformity of the current near the first metal plate, and reduce the risk of lithium precipitation.

In some embodiments, the first electrode plate is a cathode electrode plate, the second electrode plate is an anode electrode plate, and the first metal plate is made of aluminum or aluminum alloy. Such arrangement helps improve the flexibility of the first metal plate, make the first metal plate easy to bend, alleviate the influence of the first layer on the sealing of the second housing, and improve the manufacturing efficiency and sealing reliability.

In some embodiments, the first housing includes a first cylindrical section and a second cylindrical section connected to the first cylindrical section in the first direction, the first cylindrical section being disposed in the second housing; and the button cell further includes a first insulating layer, where the first insulating layer includes a first section and a second section connected to the first section in the first direction, the first section is provided between the first cylindrical section and the second housing, and the second section extends out of the second housing. The first housing is hermetically connected to the second housing through the first insulating layer, which is conducive to improving the sealing convenience and reliability of the housing of the button cell.

In some embodiments, in the first direction, a thickness of the electrode assembly is T mm, a length of the second section is L₁ mm, and a length of the first section is L₂ mm; where 1/2T≤L₂≤T, and L₁<L₂. The first section is filled between the first cylindrical section and the second housing. The first section with a large length is used, which is conducive to improving the sealing reliability between the first housing and the second housing, thereby helping improve the performance of the button cell. Setting a thickness relationship between the first section and the electrode assembly to satisfy the above formula helps improve the sealing reliability and further alleviate the influence of the first layer on the sealing of the second housing.

In some embodiments, in the first direction, the thickness of the electrode assembly is T mm, and a third distance between the winding body and the second housing is S mm; where 0.03T<S≤0.1T. Such setting helps increase the energy density of the button cell, reduce the risk of the second housing compressing the electrode assembly, and further alleviate the influence of the first layer on the sealing of the second housing.

In some embodiments, a material of the first insulating layer includes one or more selected from the group consisting of polyethylene oxide, polyvinylidene difluoride, styrene-butadiene rubber, a copolymer of vinylidene fluoride and hexafluoropropylene, polyvinylidene fluoride, modified polyvinylidene fluoride, polyacrylate, modified polyacrylate, modified polyethylene, and modified polyvinylidene difluoride. The first insulating layer made of the above material is used for sealing the first housing and the second housing, which is conducive to improving the sealing reliability of the housing and the performance of the button cell.

In some embodiments, the first portion is connected to an outermost turn of the first current collector. Since the first portion is connected to the outermost turn of the first current collector, and the outermost turn has a large radius of curvature, the first metal plate with a large size can be used, thereby helping improve the electrical performance of the cell. Correspondingly, this can also alleviate the influence on the thickness of the electrode assembly when the first portion is disposed close to an inner turn, thereby helping improve the energy density and interface performance of the cell.

In some embodiments, the first metal plate is farther from the winding central axis than the second metal plate. In this case, the first metal plate is located outside the second metal plate. When the first metal plate is connected to the second housing, the angle between the first virtual line and the second virtual line is limited to be greater than or equal to 54°, which is conducive to ensuring the conductivity of the first metal plate and reducing the risk of burrs on the first metal plate damaging the first current collector or causing a short circuit. The angle between the first virtual line and the second virtual line is limited to be less than or equal to 66°, which allows for an appropriate width of the first layer, thereby helping reduce the risk of interference between the first layer of the first metal plate located outside and the second housing of the button cell, and thus improving the manufacturing efficiency and sealing reliability of the button cell.

In some embodiments, the first virtual line or an extension line of the first virtual line at the first end point passes through the second metal plate. In this way, as viewed from the outer turn to the inner turn of the winding body, the first metal plate has a portion overlapping with the second metal plate, and the positions of the first metal plate and the second metal plate are relatively concentrated. This facilitates the connection of the first metal plate and the second metal plate to the housing of the cell.

In some embodiments, the second virtual line or an extension line of the second virtual line at the second end point passes through the second metal plate. In this way, as viewed from the outer turn to the inner turn of the winding body, the first metal plate has a portion overlapping with the second metal plate, and the positions of the first metal plate and the second metal plate are relatively concentrated. This facilitates the connection of the first metal plate and the second metal plate to the housing of the cell.

In some embodiments, a portion of the second metal plate connected to the second current collector is a third portion, and in a direction perpendicular to the first direction, the first portion overlaps with the third portion. Such arrangement helps enlarge the connection size of the first portion and the first current collector and/or the connection size of the third portion and the second current collector, thereby improving the connection stability, reducing the connection impedance, and improving the safety performance.

A second aspect of this application proposes an electronic device, where the electronic device includes the button cell according to the first aspect.

### BRIEF DESCRIPTION OF DRAWINGS

To describe the technical solutions of this application and in the prior art more clearly, the following briefly describes the accompanying drawings required to be used in this application and the prior art. Apparently, the accompanying drawings in the following description show merely some embodiments of this application, and persons of ordinary skill in the art may still derive other drawings from these accompanying drawings without creative efforts.
FIG. 1 is a schematic cross-sectional view of a button cell along an XY plane according to an embodiment of this application;
FIG. 2 is a schematic structural diagram of an unwound first current collector according to an embodiment of this application;
FIG. 3 is a schematic structural diagram in direction Z in FIG. 2;
FIG. 4 is another schematic structural diagram of an unwound first current collector in direction Z according to an embodiment of this application;
FIG. 5 is another schematic structural diagram of an unwound first current collector according to an embodiment of this application;
FIG. 6 is a schematic structural diagram in direction Z in FIG. 5;
FIG. 7 is a schematic cross-sectional view of a button cell along a YZ plane according to an embodiment of this application;
FIG. 8 is a schematic structural diagram of an electronic device according to an embodiment of this application;
FIG. 9 is a schematic structural diagram of a circumcircle of a winding body according to an embodiment of this application;
FIG. 10 is a schematic cross-sectional view of a button cell along an XY plane according to an embodiment of this application;
FIG. 11 is a schematic structural diagram of an unwound second current collector according to an embodiment of this application;
FIG. 12 is another schematic cross-sectional view of a button cell along an XY plane according to an embodiment of this application;
FIG. 13 is another schematic cross-sectional view of a button cell along an XY plane according to an embodiment of this application; and
FIG. 14 is another schematic cross-sectional view of a button cell along a YZ plane according to an embodiment of this application.

### Reference signs:

10. electronic device; 100. button cell; 110. first housing; 120. second housing; 130. electrode assembly; 140. first layer; 131. winding body; 132. first metal plate; 1311. first current collector; 1311a. first end edge; 1311b. second end edge; 134. first edge; 135. second edge; 1318. first electrode plate; 1319. second electrode plate; 300. recess; 310. bottom wall; 320. side wall; 330. opening; 400. circumcircle; 410. center; 500. first surface; 600. second surface; 1321. first portion; 1322. second portion; 141. first side edge; 142. second side edge; 143. third side edge; 144. fourth side edge; A. first end point; B. second end point; M. winding central axis; 150. first virtual line; 160. second virtual line; 170. second layer; 1312. second current collector; 1313. separator; 133. second metal plate; 1314. first region; 1315. second region; 1316. third region; 111. first cylindrical section; 112. second cylindrical section; 180. first insulating layer; 181. first section; 182. second section; α. included angle; 1317. first active substance layer; 1320. second active substance layer; 190. third layer; 1901. fifth side edge; 1902. sixth side edge; 1903. third portion; 1904. fourth portion; 136. third edge; 137. fourth edge; 200. third virtual line; 210. fourth virtual line; E. third end point; F. fourth end point; and β. included angle.

### DETAILED DESCRIPTION

The following describes the technical solutions in some embodiments of this application clearly and in detail. Apparently, the described embodiments are only some rather than all embodiments of this application. Unless otherwise defined, all technical and scientific terms used herein shall have the same meanings as commonly understood by persons skilled in the art to which this application pertains. The terms used herein in the specification of this application are for description of specific embodiments only without any intention to limit this application.

The following describes some embodiments of this application in detail. However, this application may be embodied in many different implementations and should not be construed as being limited to some illustrative embodiments described herein. Rather, these illustrative embodiments are provided so that this application can be conveyed to persons skilled in the art thoroughly and in detail.

In addition, in the accompanying drawings, sizes or thicknesses of various components and layers may be exaggerated for brevity and clarity. Throughout the text, the same numerical values represent the same elements. As used herein, the term "and/or" includes any and all combinations of one or more of the associated listed items. In addition, it should be understood that when an element A is referred to as being "connected to" an element B, the element A can be directly connected the element B or an intermediate element C may be present therebetween such that the element A and the element B are indirectly connected to each other.

Further, the use of "may" when describing some embodiments of this application relates to "one or more embodiments of this application".

The terminology used herein is merely intended to describe specific embodiments without any intention to limit this application. As used herein, the singular forms are intended to include the plural forms as well, unless otherwise clearly specified in the context. It should be further understood that the term "comprise" or "include" used in this specification indicates the presence of stated features, numerical values, steps, operations, elements, and/or components but do not preclude the presence or addition of one or more other features, numerical values, steps, operations, elements, components, and/or combinations thereof.

Spatial related terms such as "above" may be used herein for ease of description to describe the relationship between one element or feature and another element (a plurality of elements) or feature (a plurality of features) as illustrated in the figure. It should be understood that spatial related terms are intended to encompass different orientations of equipment or devices in use or operation in addition to the orientations depicted in the figures. For example, if the equipment in the figures is turned over, elements described as "above" or "over" other elements or features would then be oriented "below" or "beneath" the other elements or features. Thus, the example term "above" can encompass both the orientations above and below. It should be understood that although the terms such as first, second, and third may be used herein to describe various elements, components, regions, layers, and/or portions, these elements, components, regions, layers, and/or portions should not be limited by these terms. These terms are used to distinguish one element, component, region, layer, or portion from another element, component, region, layer, or portion. Therefore, the first element, component, region, layer, or portion discussed below may be referred to as the second element, component, region, layer, or portion without departing from the teachings of the illustrative embodiments.

Various embodiments in this specification are described in related manners, provided that same or similar parts of various embodiments are referred to each other. Each embodiment focuses on the difference from another embodiment.

Some embodiments of this application are described in detail below. Without conflict, the following embodiments and features in these embodiments may be combined with each other.

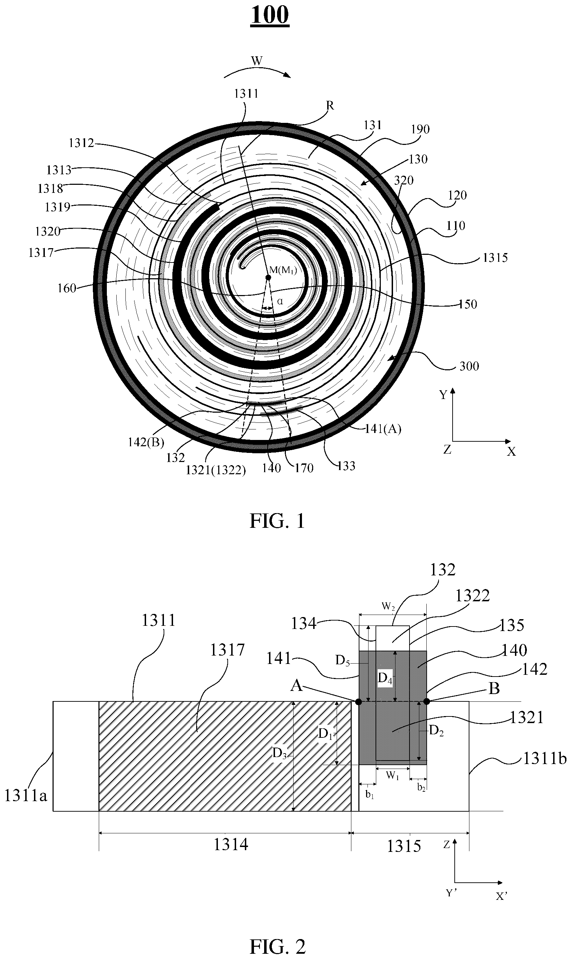

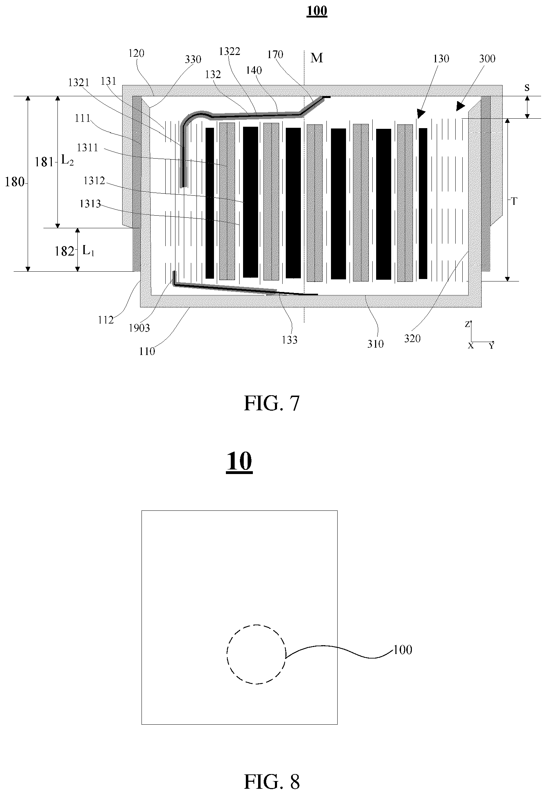

As shown in FIGs. 1, 2, 3, and 7, an embodiment of a first aspect of this application provides a button cell 100 including a first housing 110, a second housing 120, an electrode assembly 130, and a first layer 140. In some embodiments, the first housing 110 and the second housing 120 may be made of metal. As shown in FIG. 7, the first housing 110 has a recess 300 facing a first direction, the second housing 120 covers the recess 300 and is connected to and fits with the first housing 110 to form an accommodating space, and the electrode assembly 130 is disposed in the accommodating space. The first housing 110 has a bottom wall 310 and a side wall 320 connected to the bottom wall 310, where the bottom wall 310 and the side wall 320 enclose the recess 300. A direction perpendicular to a surface of the bottom wall 310 is the first direction Z. The side wall 320 extends from an edge of the bottom wall 310 along the first direction Z, and the side wall 320 encloses an opening 330 at an end away from the bottom wall 210. The recess 300 faces the first direction Z. The bottom wall 310 extends to the opening 330 along the first direction. The electrode assembly 130 includes a winding body 131 and a first metal plate 132, where the winding body 131 includes a first current collector 1311. The winding body 131 indicates that the electrode assembly 130 is a winding structure. A fourth direction X and a fifth direction Y perpendicular to each other are defined, and a plane formed in the fourth direction X and the fifth direction Y is perpendicular to the first direction Z.

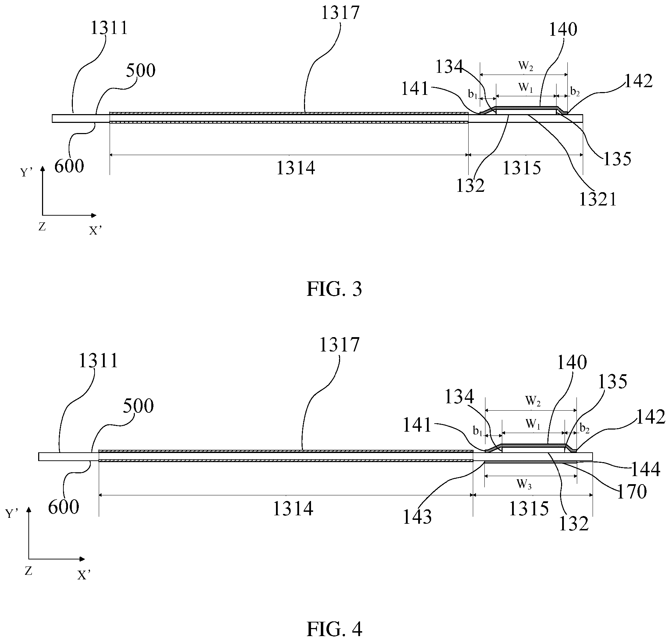

As shown in FIGs. 2 and 3, FIG. 2 is a schematic structural diagram of the first current collector 1311 connected to the unwound first metal plate 132, and FIG. 3 is a schematic structural diagram in the first direction in FIG. 2. The first current collector 1311 has a first end edge 1311a and a second end edge 1311b opposite each other in a second direction X'. The first end edge 1311a and/or the second end edge 1311b extends along the first direction Z. A third direction Y', the first direction Z, and the second direction X' are perpendicular to each other.

As shown in FIG. 2, the first metal plate 132 is connected to the first current collector 1311 and extends out of the first current collector 1311 along the first direction Z. The first metal plate 132 includes a first portion 1321 connected to the first current collector 1311 and a second portion 1322 extending out of the first current collector 1311. The first direction Z is perpendicular to a winding direction W of the winding body 131. As shown in FIGs. 1 and 2, the winding direction W of the winding body 131 refers to a direction along which the first end edge 1311a of the first current collector 1311 is wound toward the second end edge 1311b. In other words, the winding direction W of the winding body 131 is the second direction X' when the first current collector 1311 is in an unwound state. As shown in FIG. 2, the first layer 140 is connected to the first metal plate 132 and covers the first portion 1321. In the winding direction W of the winding body 131, that is, in the second direction X' from the first end edge 1311a to the second end edge 1311b of the first current collector 1311, the first layer 140 includes a first side edge 141 and a second side edge 142 opposite to each other, and the first metal plate 132 includes a first edge 134 and a second edge 135 opposite each other. As viewed from the third direction Y', the first side edge 141 is an edge of the first layer 140 extending along the first direction Z, and the second side edge 142 is another edge of the first layer 140 extending along the first direction Z. The first layer 140 covers the first portion 1321, and the first layer 140 covers at least part of the first edge 134 and at least part of the second edge 135 of the first metal plate 132. The first side edge 141 and the second side edge 142 extend out of the first current collector 1311 along the first direction Z. As viewed from the third direction Y', the first side edge 141 intersects with the first current collector 1311 at a first end point A, and the second side edge 142 intersects with the first current collector 1311 at a second end point B. As shown in FIG. 1, as viewed from the first direction Z, a line connecting the first end point A and a winding central axis M of the winding body 131 is defined as a first virtual line 150, a line connecting the second end point B and the winding central axis M is defined as a second virtual line 160, and an included angle α between the first virtual line 150 and the second virtual line 160 is 54° to 66°.

The first layer 140 may be attached to the first metal plate 132 and the first current collector 1311 through adhesion or other manners. In some embodiments, the first layer 140 includes a substrate layer and an adhesive layer disposed on the substrate layer. The adhesive layer is adhered to the first metal plate 132 and the first current collector 1311. A material of the substrate layer includes one or more selected from the group consisting of polyfluoroolefin, polyethylene terephthalate, polyimide, polyamide-imide, polyvinyl chloride, and polyolefin. The adhesive layer includes an adhesive material, where the adhesive material includes one or more selected from the group consisting of carboxymethyl cellulose, styrene-butadiene rubber, polyvinylidene fluoride, polytetrafluoroethylene, fluorinated rubber, polyurethane, polyvinyl alcohol, sodium polyacrylate, polyetherimide, and acrylate.

In this application, the button cell 100 includes the first housing 110, the second housing 120, the electrode assembly 130, and the first layer 140. The first housing 110 is connected to the second housing 120 to form the accommodating space, and the electrode assembly 130 is disposed in the accommodating space. The first housing 110 and the second housing 120 are used to protect the electrode assembly 130, alleviating the influence of external objects on the electrode assembly 130. The first housing 110 and the second housing 120 may be welded through various manners such as ultrasonic and laser welding to form an enclosed space. Alternatively, as shown in FIGs. 1 and 7, a first insulating layer 180 may be further provided between the first housing 110 and the second housing 120, and the first housing 110 is connected to the second housing 120 through the first insulating layer 180 to form an enclosed space. In some embodiments, a material of the first insulating layer 180 includes one or more selected from the group consisting of polyethylene oxide, polyvinylidene difluoride, styrene-butadiene rubber, a copolymer of vinylidene fluoride and hexafluoropropylene, polyvinylidene fluoride, modified polyvinylidene fluoride, polyacrylate, modified polyacrylate, modified polyethylene, and modified polyvinylidene difluoride.

The electrode assembly 130 is a component in the button cell 100 where electrochemical reactions take place to generate electrical energy. The electrode assembly 130 includes the winding body 131 and the first metal plate 132. As shown in FIGs. 1 and 2, the winding body 131 includes a first electrode plate 1318, a second electrode plate 1319, and a separator 1313 disposed between the first electrode plate 1318 and the second electrode plate 1319. The first electrode plate 1318 includes the first current collector 1311, and the first electrode plate 1318 may be a cathode electrode plate or an anode electrode plate. Correspondingly, the second electrode plate 1319 may be an anode electrode plate or a cathode electrode plate. The first electrode plate 1318, the second electrode plate 1319, and the separator 1313 are wound around the winding central axis M to form the winding body 131. As shown in FIG. 1, the first electrode plate 1318 further includes a first active substance layer 1317 disposed on a surface of the first current collector 1311, where the first active substance layer 1317 includes a first active material. The second electrode sheet 1319 further includes a second active substance layer 1320 disposed on a surface of a second current collector 1312, where the second active substance layer 1320 includes a second active material. In some embodiments, the first electrode plate 1318 is a cathode electrode plate, the first current collector 1311 may be made of aluminum, and the first active material includes a compound capable of implementing deintercalation of ions, for example, a lithium transition metal oxide or a sodium transition metal oxide. The second electrode plate 1319 is an anode electrode plate, the second current collector 1312 may be made of copper, and the second active material includes a substance capable of implementing intercalation of ions, for example, a carbon material or a silicon material.

In addition, as shown in FIGs. 2 and 3, the first portion 1321 of the first metal plate 132 is connected to the first current collector 1311. In other words, as viewed from the third direction Y', the first portion 1321 of the first metal plate 132 is a region of the first metal plate 132 overlapping with the first current collector 1311. The first metal plate 132 further has the second portion 1322. As viewed from the third direction Y', the second portion 1322 is away from the first current collector 1311 and extends along the first direction Z, and the second portion 1322 is a region of the first metal plate 132 not overlapping with the first current collector 1311. In other words, in the button cell 100, the second portion 1322 of the first metal plate 132 is closer to the second housing 120 relative to the first housing 110, which is conducive to improving the connection convenience between the second portion 1322 and the second housing 120. The first portion 1321 of the first metal plate 132 may be connected to the first current collector 1311 through welding. Further, when the first electrode plate 1318 is a cathode electrode plate, the first metal plate 132 may be a cathode electrode tab connected to the cathode electrode plate. When the first electrode plate 1318 is an anode electrode plate, the first metal plate 132 may be an anode electrode tab connected to the anode electrode plate. Further, when the first metal plate 132 is a cathode electrode tab, its material may include one or more of aluminum (Al) and aluminum alloy. When the first metal plate 132 is an anode electrode tab, its material may include one or more selected from the group consisting of nickel (Ni), copper (Cu), and nickel-plated copper (Ni-Cu).

The provision of the first layer 140 helps reduce the risk of burrs on the first metal plate 132 damaging the first current collector and causing a short circuit.

As shown in FIG. 2, the first layer 140 also extends out of the first current collector 1311 along the first direction Z. A size D₄ of the first layer 140 extending out of the first current collector 1311 along the first direction Z is smaller than a size D₅ of the second portion 1322 of the first metal plate 132 in the first direction Z. This allows an end portion of the first metal plate 132 extending out of the first current collector 1311 to have a region exposed to the first layer 140, thereby facilitating the connection of the second portion 1322 of the first metal plate 132 to the housing of the button cell 100.

In this application, the design of the first layer 140 is improved. Specifically, in the second direction X', a width of the first layer 140 exceeds a width of the first metal plate 132, the first side edge 141 and second side edge 142 of the first layer 140 extend from both sides of the first metal plate 132 respectively, the first side edge 141 intersects with the first current collector 1311 at the first end point A, and the second side edge 142 intersects with the first current collector 1311 at the second end point B. As shown in FIG. 1, the first end point A is connected to the winding central axis M of the winding body 131 to form the first virtual line 150, and the second end point B is connected to the winding central axis M to form the second virtual line 160. In other words, as viewed from the first direction Z, the winding central axis M has a projection point M₁ in the first direction Z. The first end point A being connected to the winding central axis M of the winding body 131 and the second end point B being connected to the winding central axis M mean that the projection point M₁ and the first end point A are connected to form the first virtual line 150, and the projection point M₁ and the second end point B are connected to form the second virtual line 160. The included angle α between the first virtual line 150 and the second virtual line 160 is 54° to 66°.

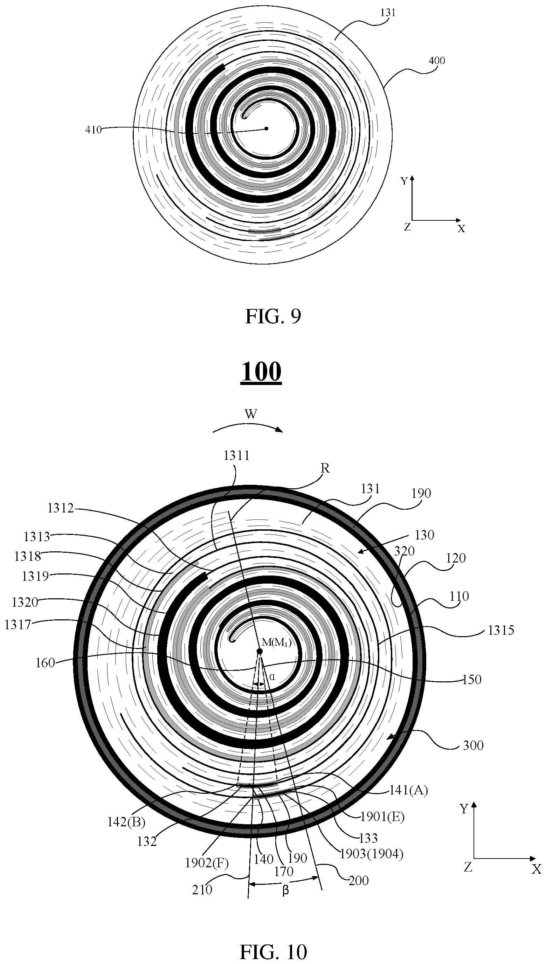

In this application, as shown in FIGs. 1, 7, and 9, the winding central axis M is an axis around which the winding body 131 is wound. A circumcircle 400 of the winding body 131 can be made by obtaining an image of the electrode assembly 130 viewed in the first direction Z, the center 410 of the circumcircle 400 is determined, and a line extending from the center 410 along the first direction Z is the winding central axis M. It can be understood that in FIG. 9, to illustrate the circumcircle 400 and the winding body 131 clearly, the circumcircle 400 actually connects to a peripheral contour of the winding body 131.

In this application, the sizes and structural relationship of the first layer 140 and first metal plate 132 of the button cell 100 are designed, thereby helping improve the production yield and performance of the button cell 100. Specifically, the first layer 140 is connected to the first portion 1321 of the first metal plate 132. As viewed from the first direction Z, the included angle α between the first virtual line 150 and the second virtual line 160 is specifically 54° to 66°. In other words, in this application, a width of the first layer 140 in the winding direction W of the winding body 131 is limited. When the included angle α between the first virtual line 150 and the second virtual line 160 is greater than or equal to 54°, both the first layer 140 and the first metal plate 132 have sufficient widths, thereby helping ensure the conductivity of the first metal plate 132 and further helping reduce the risk of burrs on the first metal plate 132 damaging the first current collector 1311 or causing a short circuit. When the included angle α between the first virtual line 150 and the second virtual line 160 is less than or equal to 66°, the first layer 140 has an appropriate width, thereby helping reduce the risk of interference between the first layer 140 and the second housing 120 of the button cell 100, and thus improving the manufacturing efficiency and sealing reliability of the button cell 100.

In some embodiments, as shown in FIG. 2, the width of the first metal plate 132 in the winding direction W, that is, the second direction X', is W₁ mm, and the width of the first layer 140 in the winding direction W, that is, the second direction X', is W₂ mm. As shown in FIG. 1, as viewed from the first direction Z, a distance from the winding central axis M to an outer edge of the winding body 131 is R mm; where 0.4R ≤ W₁ ≤ 0.7R, and 0.95R ≤ W₂ ≤ 1.15R. In this application, as shown in FIG. 9, the distance R from the winding central axis M to the outer edge of the winding body 131 is the radius of the circumcircle 400 of the winding body 131.

When the width W₁ of the first metal plate 132 and the width W₂ of the first layer 140 are within the above range, that is, a width range of the first layer 140 exceeding the first metal plate 132 is limited, which is conducive to further reducing the risk of burrs on the first metal plate 132 damaging the first current collector 1311 or causing a short circuit, and further reducing the risk of interference between the first layer 140 and the housing of the button cell 100, thereby helping improve the production efficiency of the button cell 100 and the performance of the button cell 100.

As shown in FIGs. 1 and 4, in some embodiments, the button cell 100 further includes a second layer 170, where the second layer 170 is connected to the first current collector 1311 and covers the first portion 1321 as viewed from the third direction Y', the second layer 170 is located on a side of the first current collector 1311 facing away from the first layer 140, and the second layer 170 extends out of the first current collector 1311 along the first direction Z and is connected to the first metal plate 132.

As shown in FIGs. 2 and 4, the first current collector 1311 has a first surface 500 and a second surface 600 opposite each other in the third direction Y', that is, the third direction Y' may be a thickness direction of the first current collector 1311. The first metal plate 132 is welded to the first surface 500. The first surface 500 and second surface 600 of the first current collector 1311 are each provided with the first active substance layer 1317. The first layer 140 covers the first portion 1321 of the first metal plate 132. The second layer 170 is located on the side of the first current collector 1311 facing away from the first layer 140, that is, the second layer 170 is located on the second surface 600 of the first current collector 1311. The second layer 170 covering the first portion 1321 means that a projection of the second layer 170 in the third direction Y' covers the first portion 1321. In other words, after the first metal plate 132 is welded to the first surface 500 of the first current collector 1311, the second layer 170 and the first layer 140 may be respectively located on both sides of the first metal plate 132 in a thickness direction. The second layer 170 extends out of the first current collector 1311 along the first direction Z and is also connected to the first metal plate 132. Areas of the first layer 140 and the second layer 170 are both larger than area of the first portion 1321.

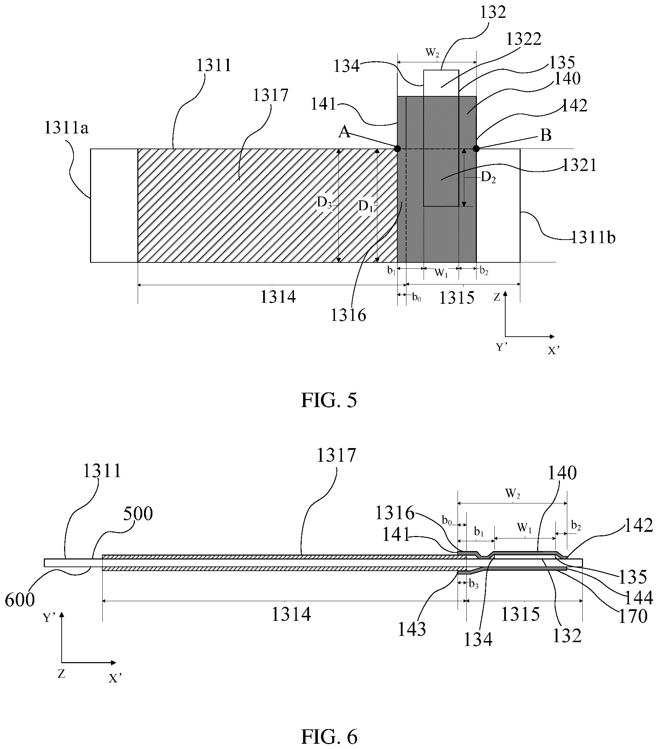

In some embodiments, the second layer 170 may alternatively be correspondingly set according to the size specification requirements of the first layer 140. Specifically, as shown in FIG. 4, a width of the second layer 170 in the second direction X' may be W₃ mm, and 0.95R ≤ W₃ ≤ 1.15R. In the second direction X', the second layer 170 further has a third side edge 143 and a fourth side edge 144. Optionally, the third side edge 143 and the first side edge 141 may be flush with each other in the second direction X' (as shown in FIGs. 4 and 6) or not flush with each other. The fourth side edge 144 and the second side edge 142 may be flush with each other in the second direction X' (as shown in FIGs. 4 and 6) or not flush with each other. In these embodiments of this application, the first metal plate 132 is doubly wrapped by the first layer 140 and the second layer 170, which helps further reduce the risk of burrs on the first metal plate 132 damaging the first current collector 1311 or causing a short circuit.

As shown in FIGs. 1 and 7, in some embodiments, the winding body 131 further includes the second electrode plate 1319 and the separator 1313 disposed between the first electrode plate 1318 and the second electrode plate 1319. The second electrode plate 1319 includes the second current collector 1312, the electrode assembly 130 includes a second metal plate 133, and the second metal plate 133 is connected to the second current collector 1312.

The separator 1313 is used to separate the first current collector 1311 and the second current collector 1312, so as to prevent internal short circuits between the first electrode plate 1318 and the second electrode plate 1319, and allow electrolytic ions to pass freely to form a conductive path. The separator 1313 is a porous plastic film and is commonly made of polypropylene (PP), polyethylene (PE), a copolymer of propylene and ethylene, or a polyethylene homopolymer. The second metal plate 133 is connected to the second current collector 1312, and the second metal plate 133 may be a cathode electrode tab or an anode electrode tab.

Further, as shown in FIG. 7, the second housing 120 is electrically connected to the first metal plate 132, and the first housing 110 is electrically connected to the second metal plate 133.

Electrical connection means that the second housing 120 and the first metal plate 132 or the first housing 110 and the second metal plate 133 may be directly connected to each other or indirectly connected to each other through a conductive member. For example, in a specific embodiment, the second housing 120 may be fixedly connected to the first metal plate 132 through manners such as welding. The second metal plate 133 may be first connected to a conductive member such as a copper sheet or a nickel sheet, and then connected to the first housing 110 through the conductive member. In this application, the current generated by the electrode assembly 130 can be released through the housing of the button cell 100, which is conducive to increasing a contact area for charging and discharging the button cell 100, thereby helping improve the charging and discharging reliability of the button cell 100 and the performance of the button cell 100.

Further, as shown in FIG. 7, the second housing 120 is welded to the first metal plate 132, and the first housing 110 is welded to the second metal plate 133. The manner of welding is conducive to improving the connection reliability between the first metal plate 132 and the second housing 120 and the connection reliability between the first housing 110 and the second metal plate 133.

In some embodiments, the first electrode plate 1318 is a cathode electrode plate, the second electrode plate 1319 is an anode electrode plate, the second housing 120 may be made of steel, aluminum, or aluminum alloy, and the first housing 110 may be made of steel. This helps reduce the risk of corrosion on the second housing 120 and the first housing 110 due to differences in electrolytes or potentials of a cathode electrode and an anode electrode. In some embodiments, the steel housing includes elements Fe and C and may further include one or more selected from the group consisting of elements Ni, Co, Al, Mn, Cr, Cu, Mg, Mo, S, Si, Ti, V, Pb, Sb, N, and P. In some embodiments, the aluminum alloy housing includes element Al and may further include one or more selected from the group consisting of Mn, Cr, Ni, Co, Cu, Fe, Mg, Si, Ti, V, and Zn. In some embodiments, a surface of the steel housing facing the winding body 131 may be provided with a nickel (Ni) layer, which is conducive to reducing the risk of the steel housing being corroded by an electrolyte. In some embodiments, a surface of the steel housing facing away from the winding body 131 may be provided with a nickel (Ni) layer, which is conducive to reducing the risk of the steel housing being corroded due to the influence of the external environment.

In some embodiments, the first electrode plate 1318 is an anode electrode plate, the second electrode plate 1319 is a cathode electrode plate, the second housing 120 may be made of steel, and the first housing 110 may be made of steel, aluminum, or aluminum alloy.

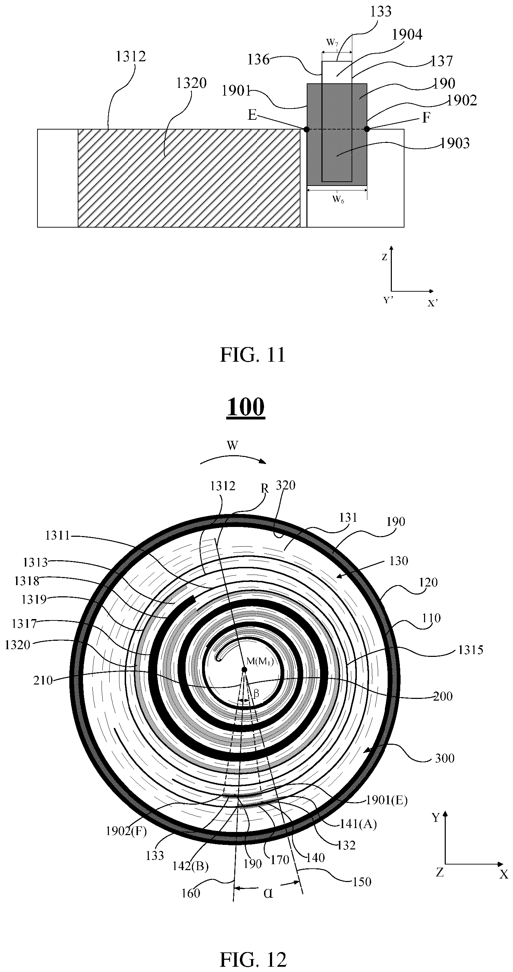

In some embodiments, as shown in FIG. 12, the first metal plate 132 is farther from the winding central axis M than the second metal plate 133. In this case, the first metal plate 132 is located outside the second metal plate 133. When the first metal plate 132 is connected to the second housing 120, the angle between the first virtual line 150 and the second virtual line 160 is limited to be greater than or equal to 54°, which is conducive to ensuring the conductivity of the first metal plate 132 and reducing the risk of burrs on the first metal plate 132 damaging the first current collector 1311 or causing a short circuit. The angle between the first virtual line 150 and the second virtual line 160 is limited to be less than or equal to 66°, which allows for an appropriate width of the first layer 140, thereby helping reduce the risk of interference between the first layer 140 of the first metal plate 132 located outside and the second housing 120 of the button cell 100, and thus improving the manufacturing efficiency and sealing reliability of the button cell 100.

In some embodiments, as shown in FIG. 5, the first current collector 1311 includes a first region 1314 provided with the first active substance layer 1317 and a second region 1315 connected to the first region 1314 along the winding direction W of the winding body 131, that is, the second direction X'. The first portion 1321 is connected to the second region 1315. The first layer 140 includes a third region 1316 covering the first active substance layer 1317.

As shown in FIGs. 5 and 6, typically, the first current collector 1311 is provided with the first active substance layer 1317 on both sides, that is, the first surface 500 and the second surface 600 in the third direction Y'. This helps increase the energy density of the cell. The first layer 140 has a third region 1316 overlapping with the first region 1314 provided with the first active substance layer 1317. In other words, as shown in FIG. 5, as viewed from the third direction Y', the third region 1316 of the first layer 140 completely covers a tail region of the first active substance layer 1317 close to the first metal plate 132. In the second direction X', the third region 1316 has a size overlapping with the first active substance layer 1317. In the first direction Z, a size of the first layer 140 overlapping with the first current collector 1311 is the width of the first current collector 1311. Such arrangement helps reduce the risk of an active material detaching from the first current collector 1311, improve the reliability of the button cell and reduce the material cost of the first active substance layer 1317. Further, when the first current collector 1311 is a cathode electrode current collector, the third region 1316 covers the tail of the first active substance layer 1317 of the cathode electrode current collector. This helps allow a width of the active substance layer of the cathode electrode current collector to be smaller than a width of the active substance layer of an anode electrode current collector, thereby helping reduce the risk of lithium precipitation on the cathode current collector.

In some embodiments, as shown in FIGs. 5 and 6, in the winding direction W of the winding body 131, that is, the second direction X', a first distance between the first side edge 141 and the first metal plate 132 is b₁ mm, and a second distance between the second side edge 142 and the first metal plate 132 is b₂ mm, and a width of the third region 1316 is b₀ mm; where 0<b₀<b₁, and b₂<W₂-W₁. As shown in FIG. 5, the first distance between the first side edge 141 and the first metal plate 132 refers to a distance between the first side edge 141 and the first edge 134 of the first metal plate 132 in the second direction X'. The second distance between the second side edge 142 and the first metal plate 132 refers to a distance between the second side edge 142 and the second edge 135 of the first metal plate 132 in the second direction X'. The width of the third region 1316 refers to a width of the third region 1316 overlapping with the first active substance layer 1317 in the second direction X'. As shown in FIG. 5, it is easily understood that b₁+b₂=W₂-W₁, in other words, in these embodiments of this application, when b₂<W₂-W₁, the first distance b₁ is not 0.

When b₀>0, such setting is conducive to reducing the risk of the active material detaching from the first current collector 1311, improving the reliability of the button cell, and reducing the material cost of the first active substance layer 1317. This can also balance the distance between the first metal plate 132 and the first active substance layer 1317, improve the uniformity of the current near the first metal plate 132, and reduce the risk of lithium precipitation.

When b₀<b₁, the area of the first active substance layer 1317 covered by the third region 1316 is not excessively large, thereby helping increase the energy density of the cell.

Further, as shown in FIG. 6, the second layer 170 may also have a region with a width of b₃ mm in the second direction X', and the region covers the tail of the first active substance layer 1317 on the side of the first current collector 1311 facing away from the first metal plate 132. This helps further reduce the risk of the active material detaching from the first current collector 1311, improve the reliability of the button cell, and reduce the material cost of the first active substance layer 1317. Moreover, when the first current collector 1311 is a cathode electrode current collector, such arrangement further helps reduce the risk of lithium precipitation on the cathode electrode current collector.

It can be seen from a plurality of embodiments described above that the first layer 140 and the second layer 170 may have various sizes overlapping with the first current collector 1311 in the first direction Z. Specifically, the size of the first layer 140 or the second layer 170 overlapping with the first current collector 1311 in the first direction Z is defined as D₁ mm. The size of the first portion 1321 of the first metal plate 132 in the first direction Z is defined as D₂ mm. The width of the first current collector 1311 in the first direction Z is defined as D₃ mm. It is easily understood that as shown in FIG. 2, when the first layer 140 or the second layer 170 has no region overlapping with the first active substance layer 1317, D₂<D₁≤D₃. Alternatively, as shown in FIG. 5, when the first layer 140 or the second layer 170 has a region overlapping with the first active substance layer 1317, D₂<D₁=D₃.

In some embodiments, as shown in FIG. 7, the first housing 110 includes a first cylindrical section 111 and a second cylindrical section 112, where the first cylindrical section 111 is disposed in the second housing 120. The button cell 100 further includes a first insulating layer 180, where the first insulating layer 180 is located between the first housing 110 and the second housing 120, the first insulating layer 180 includes a first section 181 and a second section 182, the first section 181 is located between the first cylindrical section 111 and the second housing 120, and the second section 182 extends out of the second housing 120. The first housing 110 is hermetically connected to the second housing 120 through the first insulating layer 180, which is conducive to improving the sealing convenience and reliability of the housing of the button cell 100.

In some embodiments, a material of the first insulating layer 180 includes one or more selected from the group consisting of polyethylene oxide, polyvinylidene difluoride, styrene-butadiene rubber, a copolymer of vinylidene fluoride and hexafluoropropylene, polyvinylidene fluoride, modified polyvinylidene fluoride, polyacrylate, modified polyacrylate, modified polyethylene, and modified polyvinylidene difluoride. The first insulating layer 180 made of the above material is used for sealing the first housing 110 and the second housing 120, which is conducive to improving the sealing reliability of the housing and the performance of the button cell 100.

In some embodiments, as shown in FIG. 7, in the first direction Z, a thickness of the electrode assembly 130 is T, a length of the second section 182 is L₁, and a length of the first section 181 is L₂; where 1/2T≤L₂≤T, and L₁<L₂. The first section 181 is filled between the first cylindrical section 111 and the second housing 120. The first section 181 with a large length is used, which is conducive to improving the sealing reliability between the first housing 110 and the second housing 120, thereby helping improve the performance of the button cell 100. Setting a thickness relationship between the first section 181 and the electrode assembly 130 to satisfy the above formula helps improve the sealing reliability and further alleviate the influence of the first layer 140 on the sealing of the second housing 120.

In some embodiments, as shown in FIG. 7, in the first direction Z, a third distance between the winding body 131 and the second housing 120 is S mm, where 0.03T ≤ S ≤ 0.1T. Such setting helps increase the energy density of the button cell 100, reduce the risk of the first housing 110 and/or the second housing 120 compressing the electrode assembly 130, and further alleviate the influence of the first layer 140 on the sealing of the second housing 120.

In some embodiments, the first portion 1321 is connected to an outermost turn of the first current collector 1311. Since the first portion 1321 is connected to the outermost turn of the first current collector 1311, and the outermost turn has a large radius of curvature, the first metal plate 132 with a large size can be used, improving the electrical performance and alleviating the influence on the thickness of the electrode assembly 130 when the first portion 1321 is disposed close to an inner turn, thereby improving the energy density and the interface performance.

In this application, the parameters such as the width W₂ of the first layer 140 in the third direction Y', the width W₁ of the first metal plate 132 in the third direction Y', the distance R from the winding central axis M to the outer edge of the winding body 131, the first distance b₁, the second distance b₂, the width b₀ of the third region, the thickness T of the electrode assembly 130, the length L₁ of the second section, the length L₂ of the first section, and the third distance S can be obtained by repeatedly measuring the relevant parts of the button cell 100 and taking an average value. For example, when the width W₂ of the first layer 140 is measured using a measuring tool, the measurement can be performed 20 times, and then an average value of 20 measurement values can be calculated, to reduce measurement errors. This helps improve the reliability of the data. The measuring tool may include but is not limited to a micrometer, a vernier caliper, and a three-coordinate measuring instrument.

In some embodiments, the second metal plate 133 may be connected to the second housing 120. As shown in FIGs. 10 and 11, the second metal plate 133 is provided with a third layer 190. The second metal plate 133 is located outside the first metal plate 132. In other words, as viewed from the first direction Z, the second metal plate 133 is farther from the winding central axis M than the first metal plate 132. A width W₆ of the third layer 190 in the second direction X' is greater than the width W₇ of the second metal plate 133, and the third layer 190 has a fifth side edge 1901 and a sixth side edge 1902 in the second direction X'.

Specifically, FIG. 11 is a schematic structural diagram of the second current collector 1312 and second metal plate 133 unwound. The surface of the second current collector 1312 is provided with the second active substance layer 1320. As viewed from the third direction Y', the second metal plate 133 has a third portion 1903 overlapping with the second current collector 1312, and the second metal plate 133 also has a fourth portion 1904 extending along the first direction Z and not overlapping with the second current collector 1312. The second metal plate 133 has a third edge 136 and a fourth edge 137 opposite each other, where the third layer 190 covers the third portion 1903, that is, the third layer 190 covers the third edge 136 and fourth edge 137 of the second metal plate 133. The fifth side edge 1901 and the sixth side edge 1902 extend out of the second current collector 1312 along the first direction Z. The fifth side edge 1901 intersects with the second current collector 1312 at a third end point E, and the sixth side edge 1902 intersects with the second current collector 1312 at a fourth end point F. As shown in FIG. 10, as viewed from the first direction Z, a line connecting the third end point E and the winding central axis M of the winding body 131 is defined as a third virtual line 200, a line connecting the fourth end point F and the winding central axis M is defined as a fourth virtual line 210, and an included angle β between the third virtual line 200 and the fourth virtual line 210 is 54° to 66°.

When the included angle β between the third virtual line 200 and the fourth virtual line 210 is greater than or equal to 54°, both the third layer 190 and the second metal plate 133 have sufficient widths, thereby helping ensure the conductivity of the second metal plate 133 and further helping reduce the risk of burrs on the second metal plate 133 damaging the second current collector 1312 or causing a short circuit. When the included angle β between the third virtual line 200 and the fourth virtual line 210 is less than or equal to 66°, the third layer 190 has an appropriate width, thereby helping reduce the risk of interference between the third layer 190 on the second metal plate 133 located outside and the second housing 120 of the button cell 100, and thus improving the manufacturing efficiency and sealing reliability of the button cell 100.

In some embodiments, as shown in FIG. 1, the first virtual line 150 or an extension line of the first virtual line 150 at the first end point A passes through the second metal plate 133. In this way, as viewed from the outer turn to the inner turn of the winding body 131, the first metal plate 132 has a portion overlapping with the second metal plate 133, and the positions of the first metal plate 132 and the second metal plate 133 are relatively concentrated. This helps allow the first metal plate 132 and the second metal plate 133 to extend out of the current collector simultaneously, thereby facilitating the connection of the first metal plate 132 and the second metal plate 133 to the housing of the cell.

In some embodiments, as shown in FIG. 12, the second virtual line 160 or an extension line of the second virtual line 160 at the second end point B passes through the second metal plate 133. In this way, as viewed from the outer turn to the inner turn of the winding body 131, the first metal plate 132 has a portion overlapping with the second metal plate 133, and the positions of the first metal plate 132 and the second metal plate 133 are relatively concentrated. This helps allow the first metal plate 132 and the second metal plate 133 to extend out of the current collector simultaneously, thereby facilitating the connection of the first metal plate 132 and the second metal plate 133 to the housing of the cell.

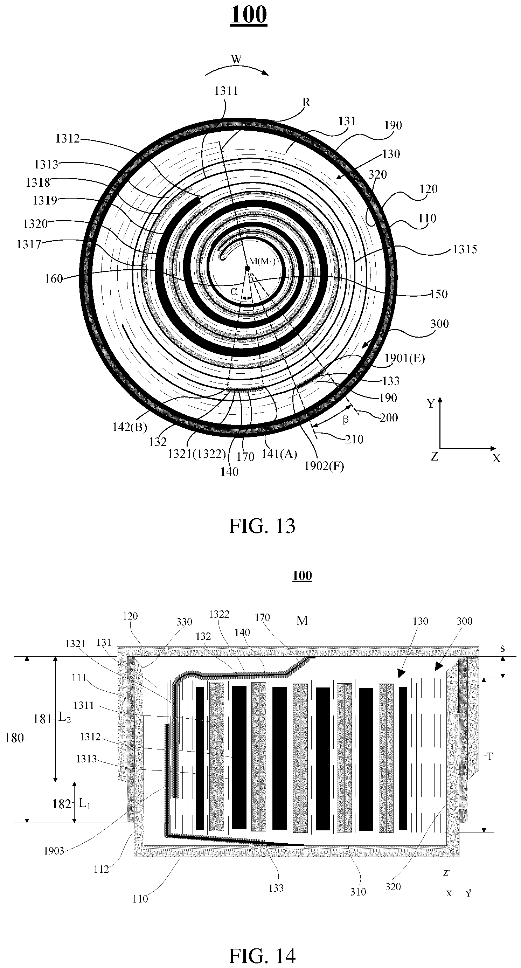

In some embodiments, as shown in FIG. 13, as viewed from the outer turn to the inner turn of the winding body 131, the first metal plate 132 has no portion overlapping with the second metal plate 133. In other words, the first virtual line 150 or the extension line of the first virtual line 150 at the first end point A does not pass through the second metal plate 133, and the second virtual line 160 or the extension line of the second virtual line 160 at the second end point B does not pass through the second metal plate 133. In this way, the first metal plate 132 and the second metal plate 133 are relatively scattered. It is easily understood that the design of the first layer 140 on the first metal plate 132 helps reduce the risk of burrs on the first metal plate 132 damaging the first current collector 1311 or causing a short circuit, and the design of the third layer 190 on the second metal plate 133 helps reduce the risk of burrs on the second metal plate 133 damaging the second current collector 1312 or causing a short circuit. The positions of the first metal plate 132 and the second metal plate 133 are relatively scattered, thereby helping enlarge the circumferential protection range by the first layer 140 and the third layer 190 on the winding body 131 of the cell, thereby helping improve the performance of the cell.

In some embodiments, as shown in FIG. 14, in a direction perpendicular to the first direction Z, the first portion 1321 overlaps with the third portion 1903. The direction perpendicular to the first direction Z refers to all possible directions on a plane perpendicular to the first direction Z. This helps enlarge the connection size of the first portion 1321 and the first current collector 1311 and/or the connection size of the third portion 1903 and the second current collector 1312, thereby improving the connection stability and reducing the connection impedance. This also helps reduce the difference of the stress applied to the winding body 131 by the first portion 1321 and the third portion 1903 under external forces, thereby improving the stress uniformity of the winding body 131 and improving the safety performance.

Specifically, a plurality of embodiments and comparative examples are listed to describe the foregoing embodiments more specifically. Experimental situations for performing short circuit test and sealing test by using various button cells in different states are shown in Table 1.

**Table 1 Influence of width of first layer and included angle on performance of button cell**

| | | | | | |
|---|---|---|---|---|---|
| Size | Size of button cell | Comparative example 1 | Comparative example 2 | Example 1 | Example 2 |
| | Total width W₂ of first layer | 1.3R | R | R | 1.1R |
| | Included angle α between first virtual line and second virtual line | 75° | 58° | 58° | 63° |
| | b₀ | 1.5 mm | 0 | 2 mm | 1.5 mm |
| Experimental result | Pass rate of short circuit test | 4/4 | 2/4 | 4/4 | 4/4 |
| | Sealing yield rate of upper and lower housing covers (visual inspection+micros copic inspection) | 85% | 92% | 97% | 95% |

In the above table, short circuit test specifically refers to that the button cell was first charged to a voltage limit at a current of 0.2C, then continuously charged at a constant voltage until a charging current dropped to 0.05C, and then a wire with a resistance of 80±20 mΩ was used to short-circuit the positive and negative electrodes of the button cell. The experiment was ended after the button cell was discharged until the button cell underwent thermal failure or short circuit for 24 hours, or the temperature of the housing was reduced by 20% from the maximum temperature rise. The pass rate refers to a percentage of the button cells that can be short-circuited for 24 hours. C refers to the capacity of the button cell. 0.2C means charging at a current that is 0.2 times the capacity of the button cell, that is, 5 hours is taken to charge the button cell to the rated capacity.

The sealing yield rate of upper and lower covers refers to that the button cell is visually or microscopically observed to determine whether the button cell has sealing leakage or sealing discontinuity. If the button cell has no sealing leakage or sealing discontinuity, the button cell is sealed well.

It can be seen from comparison between Example 1 and Comparative Example 2 that when the first layer 140 has the region overlapping with the first active substance layer 1317 (b₀ is not 0), the performance of the button cell in Example 1 is better than the performance of the button cell in Comparative Example 2. That is, the first layer 140 has the region overlapping with the active substance layer, which helps reduce the risk of the active material detaching from the first current collector 1311, thereby helping improve the reliability and performance of the button cell.

It can be seen from comparison between Example 2 and Comparative Example 1 that the performance of the button cell in Example 2 is better than the performance of the button cell in Comparative Example 1. That is, when the included angle α between the first virtual line 150 and the second virtual line 160 is 54° to 66° and the width W₂ of the first layer 140 falls within a size range of 0.95R≤W₂≤1.15R, the reliability and performance of the button cell can be improved.

As shown in FIG. 8, a second aspect of this application proposes an electronic device 10 including the button cell 100 according to the first aspect. The electronic device 10 of this application uses the button cell 100 according to the first aspect as a power source.

It should be noted that relational terms such as "first" and "second" herein are only used to distinguish one entity from another entity and do not necessarily require or imply any such actual relationship or order between these entities. In addition, the terms "include", "comprise", or any of their variants are intended to cover a non-exclusive inclusion, such that an article or equipment that includes a series of elements includes not only those elements but also other elements that are not expressly listed, or further includes elements inherent to such article or equipment.

The foregoing descriptions are merely preferable embodiments of this application, but are not intended to limit this application. Any modification, equivalent replacement, or improvement made without departing from the principle of this application shall fall within the protection scope of this application.

## Claims

1. A button cell, comprising:
a first housing having a recess facing a first direction;
a second housing covering the recess and connected to and fitting with the first housing to form an accommodating space;
an electrode assembly disposed in the accommodating space and comprising a winding body and a first metal plate, wherein the winding body comprises a first electrode plate, the first electrode plate comprises a first current collector, the first metal plate is connected to the first current collector and extends out of the first current collector along the first direction, a portion of the first metal plate connected to the first current collector is a first portion, and the first direction is perpendicular to a winding direction of the winding body; and
a first layer connected to the first metal plate and covering the first portion, wherein in the winding direction, the first layer comprises a first side edge and a second side edge, the first side edge and the second side edge extend out of the first current collector along the first direction, the first side edge intersects with the first current collector at a first end point, and the second side edge intersects with the first current collector at a second end point; wherein
as viewed from the first direction, a line connecting the first end point and a winding central axis of the winding body is defined as a first virtual line, a line connecting the second end point and the winding central axis is defined as a second virtual line, and an included angle between the first virtual line and the second virtual line is 54° to 66°.

2. The button cell according to claim 1, wherein, a width of the first metal plate in the winding direction is W₁ mm, a width of the first layer in the winding direction is W₂ mm, and as viewed from the first direction, a distance from the winding central axis to an outer edge of the winding body is R mm; wherein 0.4R≤W₁≤0.7R, and 0.95R≤W₂≤1.15R.

3. The button cell according to claim 1, wherein, the button cell further comprises a second layer, the second layer is connected to the first current collector and covers the first portion, the second layer is provided on a side of the first current collector facing away from the first layer, and the second layer extends out of the first current collector along the first direction and is connected to the first metal plate.

4. The button cell according to claim 1, wherein, the winding body further comprises a second electrode plate and a separator provided between the first electrode plate and the second electrode plate; and
the second electrode plate comprises a second current collector, the electrode assembly further comprises a second metal plate, and the second metal plate is connected to the second current collector.

5. The button cell according to claim 4, wherein, the second housing is electrically connected to the first metal plate, and the first housing is electrically connected to the second metal plate.

6. The button cell according to claim 5, wherein, the second housing is welded to the first metal plate, and the first housing is welded to the second metal plate.

7. The button cell according to claim 4, wherein, the first current collector comprises a first region provided with a first active substance layer and a second region connecting to the first region along a side in the winding direction, the first portion is connected to the second region, and the first layer comprises a third region covering the first active substance layer.

8. The button cell according to claim 7, wherein, in the winding direction, a first distance between the first side edge and the first metal plate is b₁ mm, a second distance between the second side edge and the first metal plate is b₂ mm, and a width of the third region is b₀ mm; wherein 0<b₀<b₁, and b₂<W₂-W₁.

9. The button cell according to claim 4, wherein, the first electrode plate is a cathode electrode plate, the second electrode plate is an anode electrode plate, and the first metal plate is made of aluminum or aluminum alloy.

10. The button cell according to claim 1, wherein, the first housing comprises a first cylindrical section and a second cylindrical section connected to the first cylindrical section in the first direction, the first cylindrical section being disposed in the second housing; and
the button cell further comprises a first insulating layer, wherein the first insulating layer comprises a first section and a second section connected to the first section in the first direction, the first section is provided between the first cylindrical section and the second housing, and the second section extends out of the second housing.

11. The button cell according to claim 10, wherein, in the first direction, a thickness of the electrode assembly is T mm, a length of the second section is L₁ mm, and a length of the first section is L₂ mm; wherein 1/2T≤L₂≤T, and L₁<L₂.

12. The button cell according to claim 10, wherein, in the first direction, a third distance between the winding body and the second housing is S mm, and 0.03T≤S≤0.1T.

13. The button cell according to any one of claims 10 to 12, wherein, a material of the first insulating layer comprises one or more selected from the group consisting of polyethylene oxide, polyvinylidene difluoride, styrene-butadiene rubber, a copolymer of vinylidene fluoride and hexafluoropropylene, polyvinylidene fluoride, modified polyvinylidene fluoride, polyacrylate, modified polyacrylate, modified polyethylene, and modified polyvinylidene difluoride.

14. The button cell according to claim 1, wherein, the first portion is connected to an outermost turn of the first current collector.

15. The button cell according to claim 4, wherein, the first metal plate is farther from the winding central axis than the second metal plate.

16. The button cell according to claim 4, wherein, the first virtual line or an extension line of the first virtual line at the first end point passes through the second metal plate.

17. The button cell according to claim 4, wherein, the second virtual line or an extension line of the second virtual line at the second end point passes through the second metal plate.

18. The button cell according to claim 4, wherein, a portion of the second metal plate connected to the second current collector is a third portion, and in a direction perpendicular to the first direction, the first portion overlaps with the third portion.

19. An electronic device, wherein, the electronic device comprises the button cell according to any one of claims 1 to 18.
